Europäisches Patentamt

(19) European Patent Office

Office européen des brevets

(11) Publication number : **0 501 764 A2**

## (12) EUROPEAN PATENT APPLICATION

(21) Application number : 92301595.2

(22) Date of filing : 26.02.92

(51) Int. Cl.$^5$ : **C04B 41/62,** C04B 41/63, C04B 14/38, B05D 1/02, B01D 1/28

(30) Priority : **26.02.91 US 661552**

(43) Date of publication of application :
**02.09.92 Bulletin 92/36**

(84) Designated Contracting States :
**AT BE CH DE DK ES FR GB GR IT LI LU MC NL PT SE**

(71) Applicant : **McMath, William Hayes**
**857 General George Patton Road**
**Nashville, Tennessee 37221 (US)**

(72) Inventor : **McMath, William Hayes**
**857 General George Patton Road**
**Nashville, Tennessee 37221 (US)**

(74) Representative : **Overbury, Richard Douglas et al**
**Haseltine Lake & Co Hazlitt House 28,**
**Southampton Buildings Chancery Lane**
**London WC2A 1AT (GB)**

(54) **Treatment of asbestos materials.**

(57) The asbestos on asbestos covered articles such as power plant equipment is encapsulated and contained by the application of a hardenable resin and glass fibres which are applied with, or after, the resin. The thus coated article is then compacted by brushing or rolling, to provide consistent application and to remove air bubbles. The resin/glass fibre mix may be applied to a chopped mat, cloth or roving which is then applied to the article prior to compaction. In the preferred embodiment, a chopper gun sprayer is used to apply the resin, a catalyst, and the glass fibre.

EP 0 501 764 A2

The present invention relates to the treatment of asbestos and, more particularly, is concerned with the treatment of asbestos when present as a covering on an article such as power plant equipment.

It will be appreciated by those skilled in the art that in the past, power plant equipment such as steam and hot water pipes, turbines, feed water heaters, condensers, hot air ducts, wind boxes, and the like were coated with asbestos to prevent fires. Unfortunately, this practice has led to asbestos being a danger to workers in the area, because as asbestos ages, fibres from the asbestos enter the air and enter the respiratory systems of individuals. To this end, there have been several attempts to remove this asbestos danger from power plant equipment.

One such attempt involves the removal of the asbestos, by some type of scraping or cutting, from the power plant equipment. Unfortunately, studies have shown that this method actually increases the amount of airborne asbestos fibres in the area, thereby increasing the danger.

Studies have shown that the asbestos needs to be covered and it has been attempted to encapsulate and contain the equipment in some type of metal, such as an aluminium sheet jacket. However, this method has problems such as cost and the difficulty of sealing joints.

There is thus a need for a method of rendering harmless asbestos on power plant equipment and other articles which method is quick and efficient to use. The method must be cost effective and must be able to withstand the differences in temperature experienced by power plant equipment and wear and tear. Moreover it must encapsulate and contain the asbestos rather than involve removing the same in order to prevent an increase in airborne asbestos fibres. Also it should have consistent encapsulation and containment properties, even at joints.

According to the present invention there is provided a method for encapsulating and containing asbestos on an article comprising covering the asbestos with hardenable resin and glass fibres, and hardening the resin.

Generally, in the present method, a mixture of the resin, glass fibres, and a catalyst are applied to the surface of the asbestos-covered article to encapsulate and contain the asbestos. In a preferred embodiment, an unsaturated polyester resin is used as the resin and methyl ethyl ketone peroxide is used as a catalyst. The glass fibres can be applied either by spraying using a chopper gun, or be placed by hand on the article in the form of a mat, cloth, or stitch mat or be applied with a brush. Certain pigments may be added according to OSHA requirements or according to the user's desire. This method can be used to encapsulate and contain asbestos on any type of power plant equipment such as pipes, turbines, and the like.

By means of the invention asbestos on power plant equipment can be encapsulated and contained in a quick, efficient, and cost effective manner. Moreover, the encapsulated asbestos can withstand the temperature extremes in power plant equipment and the wear and tear experienced by the encapsulation and by the article. Moreover the method results in encapsulated articles having consistent properties throughout, including at joints in the articles.

In accordance with one embodiment of the present invention, the resin, glass fibres, and catalyst are combined to form bonding glass fibres which are applied to the surface of the asbestos covering the article. Preferably the resin is a thermosetting, unsaturated polyester resin which may be used in combination with a styrene monomer, and the catalyst is methyl ethyl ketone peroxide, which is a strong oxidizing agent. The glass fibres may be in the form of chopped fibres, mat, or cloth or the like.

In one method, a chopper gun is used to mix the resin and catalyst and simultaneously spray the chopped glass and the catalyzed resin on the surface of the article. Alternatively, the catalyzed resin may be sprayed on the surface followed by spraying of the fibres. The sprayed glass and resin are then rolled out or brushed to provide a compact and consistent surface.

In another method, a net, cloth, or stitch mat containing glass fibres and catalyzed resin is hand placed on the surface to be encapsulated. In essence, the surface is wrapped with this material. After the wrapping is complete, the wrapped section is then compacted with either a roller or brush to ensure that all the glass fibres are saturated with resin and that the wrapping is smooth and free of air pockets.

In a further method, catalyzed resin is applied to a mat, cloth or roving of, for example, glass fibres, and glass fibres are then applied. The resultant product is then placed on the surface of the article being encapsulated and compacted by, for example, rolling or brushing.

Any colour pigment can be added to the resin according to the user's desire or according to OSHA requirements for type of equipment, temperature, and pressure.

Preferably, the encapsulating material is approximately ⅛ inch in thickness or thicker. However, any thickness can be used as long as any desired fire retardant capabilities of the material are maintained.

In the preferred embodiment, the unsaturated polyester resin may be present in an amount of about sixty percent by weight and is used in combination with a styrene monomer in an amount of about forty percent by weight. Epichlorohydrin may also be present in an amount of about ½ percent by weight. Because of the sensitivity of the methylethyl ketone peroxide which is the preferred catalyst, the mixing of the resin and catalyst should be performed inside the chopper gun in order to ensure that the resin and catalyst are properly mixed, which might not occur if external mixing is used. In an embodiment antimony pentoxide, preferably in an amount of about five percent by weight, may be incorporated in the styrene monomer to provide fire retardancy.

Advantageously, fire retardant properties can also be obtained by using a resin derived from chlorendic acid, in combination with the styrene monomer. Subsequent admixture of antimony pentoxide to the chlorendic acid-based resin provides a further significant improvement in the fire retardant properties.

It is preferred to use a Venus-Gusmer low pressure airless chopper gun having an internal mix. This gun uses low pressure without air assistance and produces large droplets which remain within the spray pattern, resulting in less overspray and a much better working environment.

As discussed previously, the present method can be performed using either a hand preparation or a spray up. A hand lay up involves applying the resin and glass fibres by hand, using a brush or roller for compaction, without the aid of spray equipment. In a spray up, chopped or continuous glass fibres are sprayed simultaneously, or alternatively, with catalyzed resin onto the surface being treated.

In a hand lay up, the resin is pre-catalyzed and then applied to the surface using a brush or nap roller. A precut sheet of mat and/or woven material is then placed onto the wetted surface and rolled or brushed to remove the air voids and ensure consistent application. If the laminate includes a mat only, a roller or brush is used. If the laminate includes a woven material and a mat, the woven material is put behind the mat, and then a squeegee can be used for compaction.

In a spray up, substantially $1\frac{1}{2}$ inch glass fibres are deposited on the surface simultaneously with, or subsequent to, the application of catalyzed resin. This can be performed by means of a hand operated chopper gun that chops the glass and sprays catalyzed resin so that the two merge and are directed onto the surface together. Because there is no need for other types of matting or roving material, this method uses the least expensive raw materials.

The spray method can be used on large surfaces such as hot air ducts and feed water heaters. However, a hand application may need to be used for pipes and seals that are too small to be effectively sprayed.

Thus, although there have been described particular embodiments of a new and useful method for encapsulating and containing asbestos on power plant equipment and other articles, it is not intended that such references be construed as limitations upon the scope of this invention, except as set forth in the following claims. Further, although there have been described certain dimensions used in the preferred embodiment, it is not intended that such dimensions be construed as limitations upon the scope of this invention, except as set forth in the following claims.

## Claims

1. A method for encapsulating and containing asbestos on an article comprising covering the asbestos with hardenable resin and glass fibres and hardening the resin.

2. A method according to claim 1 wherein said resin comprises:
   a. antimony pentoxide;
   b. styrene monomer; and
   c. epichlorohydrin.

3. A method according to claim 1 wherein the hardenable resin comprises a polyester resin and a catalyst for hardening the same.

4. A method according to claim 3 which comprises:
   a. mixing the polyester resin and catalyst;
   b. covering said article with the resultant mixture; and
   c. applying glass fibres to said mixture on the article.

5. A method according to claim 4 wherein the glass fibres are applied in the form of a mat, cloth, or stitch mat.

6. A method according to claim 4 or 5 and further comprising the step of rolling or brushing the glass fibres applied to the article.

7. A method according to claim 4 wherein said steps of mixing, covering, and applying are performed by a chopper gun sprayer.

8. A method according to claim 1 which comprises:
   a. mixing the hardenable resin and a catalyst therefor in a chopper gun sprayer;
   b. spraying the resultant mixture on the article;
   c. spraying fibres in chopped form on the mixture; and
   d. compacting said sprayed materials.

9. A method according to claim 8 wherein said spraying of said mixture and said spraying of said glass fibres occur at the same time.

10. A method according to claim 1 which comprises:
    a. mixing the hardenable resin and a catalyst therefor;

b. covering a mat, cloth or roving with the resultant mixture;

c. applying glass fibres to the covered mat, cloth or roving;

d. placing said mat, cloth or roving on the surface of the article; and

e. compacting said mat, cloth or roving on said surface.

11. A method according to claim 10 wherein said covering of said mat, cloth or roving and said applying of said mat, cloth or roving occurs at the same time.

12. A method according to claim 10 or 11 wherein said compacting is effected by either rolling or brushing.